# EUROPEAN PATENT APPLICATION

(11) **EP 4 840 735 A1**
(43) Date of publication of application: **18.11.2026**
(21) Application number: 26169168.7
(22) Date of filing: 30.03.2026
(51) Int. Cl.: B62J 6/04, B62J 45/41, B62J 45/42

(54) **LIGHTING CONTROL SYSTEM AND DEVICE FOR GROUP BICYCLE RIDING**

(30) Priority: 12.05.2025 TW 114204747 U
(71) Applicant: Terasilic Co., Ltd., 231 New Taipei City Xindian Dist. (TW)
(72) Inventor: Yu, Shih-an, 231 NEW TAIPEI CITY (TW)
(74) Representative: Petraz, Gilberto Luigi

(57) **Abstract**

A lighting control system and device applicable to a group riding mode and suitable for multiple bicycles are provided. The lighting control system includes lighting control devices installed on each bicycle. Each lighting control device includes an identification connection module, an environmental sensing module, and a decision control module. The lighting control devices can pair and connect with each other through identification information to establish a group riding mode. The environmental sensing module detects the environment information behind the bicycle and generates information such as relative distance, relative speed, and object size. Based on the information, the decision control module determines the bicycle's relative position within the group and adjusts the brightness of the tail light accordingly. The tail light of the rearmost rider is set to a higher brightness, while those of other riders are dimmed to reduce visual interference for following cyclists.

## Description

### FIELD OF THE DISCLOSURE

The present disclosure relates to a bicycle, and more particularly to a bicycle lighting control system and device.

### BACKGROUND OF THE DISCLOSURE

With the growing awareness of health and the rising emphasis on environmental protection, an increasing number of individuals are taking up cycling and frequently forming groups to participate in group riding activities, enjoying both the pleasure of riding and social interaction with companions. However, during nighttime riding, while lighting is an essential safety feature, it can also become a significant source of inconvenience in group riding scenarios.

During nighttime riding, each rider's bicycle light must not only provide sufficient brightness to illuminate the road ahead but also serve as a warning light to ensure that vehicles behind can clearly identify the rider from a distance. However, these high-brightness lights often cause glare and visual fatigue for fellow group members riding closely behind, which may adversely affect concentration and riding safety.

Accordingly, it is one of the important objectives to provide a lighting control system capable of overcoming the discomfort caused by lighting among riders in group riding.

### SUMMARY OF THE DISCLOSURE

The present disclosure provides a lighting control system and device for group bicycle riding, which are capable of automatically controlling light brightness based on the position of the bicycle within the group.

To achieve one, some, or all of the aforementioned purposes or other purposes, an embodiment of the present disclosure provides a lightning control system for a group riding mode involving a plurality of bicycles. The lighting control system includes a plurality of lighting control devices disposed on the bicycles, respectively. Each of the lighting control device includes an identification connection module, an environment sensing module, and a decision control module. The identification connection module is configured to be operated in a group riding mode by establishing a paired connection with another one of the lighting control devices through identification information. The environment sensing module is configured to sense toward a rear side of the bicycle on which the lighting control device is disposed, and is configured to generate relative distance information, relative speed information, and object size information. The decision control module is signal-connected to the identification connection module and the environment sensing module. The decision control module is configured to determine a position of the bicycle in the group riding mode according to the relative distance information, the relative speed information, and the object size information, and to control a brightness of a tail light disposed on the bicycle accordingly. When it is determined that the bicycle is at a rearmost position in the group riding mode, the decision control module controls the tail light on the bicycle to emit at a first brightness. When it is determined that the bicycle is not at the rearmost position in the group riding mode, the decision control module controls the tail light on the bicycle to emit at a second brightness. The second brightness is less than the first brightness.

In an embodiment of the present disclosure, a condition for controlling the tail light to emit at the first brightness is that the relative distance information is greater than a relative distance threshold and the relative speed information is greater than a relative speed threshold.

In an embodiment of the present disclosure, a condition for controlling the tail light to emit at the second brightness is that the object size information is less than an object size threshold and the relative speed information is less than a relative speed threshold.

In an embodiment of the present disclosure, the second brightness is adjusted according to the relative distance information. As the relative distance information increases, the second brightness becomes closer to the first brightness.

In an embodiment of the present disclosure, the environment sensing module includes a radar sensor, a time-of-flight distance sensor, a Doppler sensor, and/or an image sensor.

According to an embodiment of the present disclosure, a bicycle lighting control device disposed on a bicycle is provided with an identification connection module, an environment sensing module, and a decision control module. The identification connection module is configured to be operated in the group riding mode by establishing a paired connection with another lighting control device disposed on another bicycle through identification information. The environment sensing module is adapted to sense toward a rear side of the bicycle, and configured to generate relative distance information, relative speed information, and object size information. The decision control module is configured to determine a position in the group riding mode of the bicycle according to the relative distance information, the relative speed information, and the object size information, and to control a brightness of a tail light disposed on the bicycle accordingly. When it is determined that the bicycle is at a rearmost position in the group riding mode, the decision control module controls the tail light on the bicycle to emit at a first brightness. When it is determined that the bicycle is not at the rearmost position in the group riding mode, the decision control module controls the tail light on the bicycle to emit at a second brightness. The second brightness is less than the first brightness.

As described above, the lighting control system and device for bicycles are configured to automatically adjust the tail light brightness according to the group riding formation and the inter-bicycle distance. In the group riding mode, when a front bicycle detect an approaching bicycle from the rear side, the brightness of its tail light is reduced to emit softer light that remains identifiable. When the bicycle is positioned as the last one in the group, i.e., at the rearmost position, the brightness of its tail light is increased to a warning level to ensure the rider's personal safety. The disclosure not only improves comfort during the nighttime riding, but also enhances the overall safety and coordination in group riding.

Other objectives, features, and advantages of the disclosure will be further understood from the further technological features disclosed by the embodiments of the disclosure wherein there are shown and described preferred embodiments of this disclosure, simply by way of illustration of modes best suited to carry out the disclosure.

### BRIEF DESCRIPTION OF THE DRAWINGS

FIG. 1 is a schematic diagram of a group riding mode for bicycles according to an embodiment of the present disclosure.
FIG. 2 is a schematic block diagram of a lighting control device for a bicycle according to a first embodiment of the present disclosure.
FIG. 3 is a schematic block diagram of a lighting control device for a bicycle according to a second embodiment of the present disclosure.

### DETAILED DESCRIPTION OF PREFERRED EMBODIMENTS

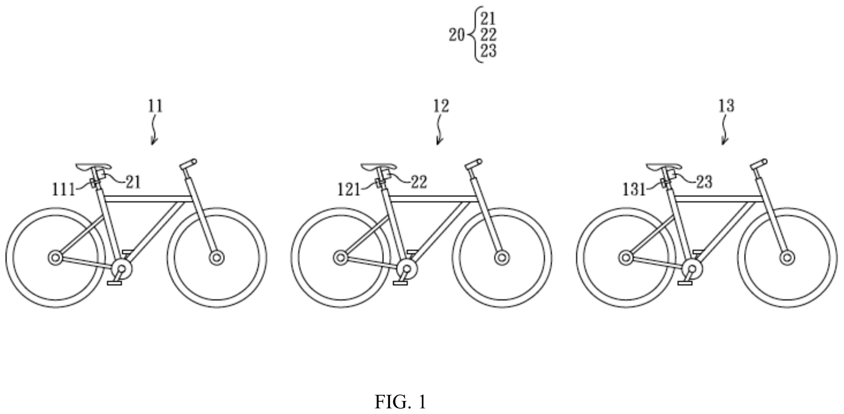

FIG. 1 is a schematic diagram of a group riding mode for bicycles according to an embodiment of the present disclosure. As shown in FIG. 1, a group riding mode in the embodiment is exemplified by three bicycles, including a first bicycle 11, a second bicycle 12, and a third bicycle 13. The first bicycle 11 is equipped with a first lighting control device 21, the second bicycle 12 is equipped with a second lighting control device 22, and the third bicycle 13 is equipped with a third lighting control device 23. Each of the lighting control devices may be mounted at any positions on the corresponding bicycle that allows for secure attachment, including, but not limited to, a handlebar, a front fork, a down tube, or a seat post.

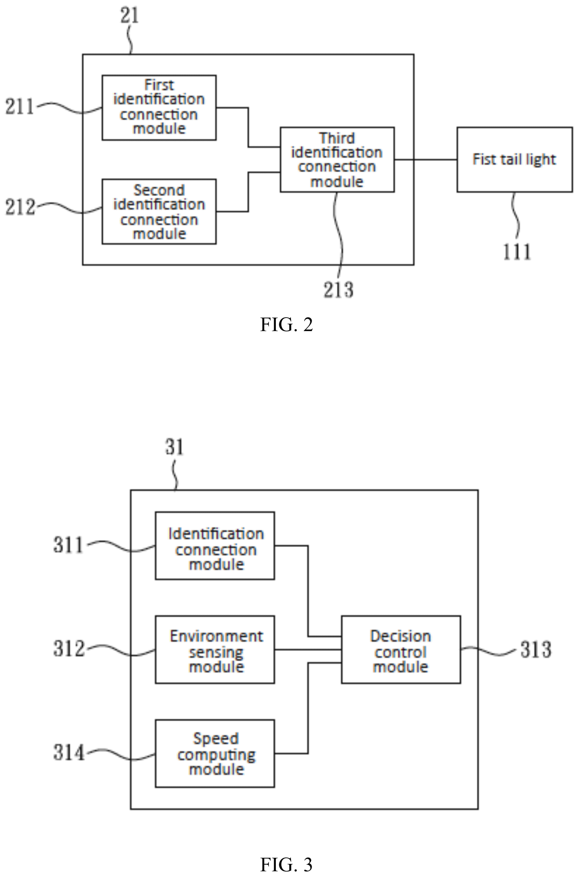

As for the lighting control device, the following description uses the first lighting control device 21 as an example. Please refer to FIG. 2, which is a schematic block diagram of a lighting control device for a bicycle according to a first embodiment of the present disclosure. As shown in FIG. 2, the first lighting control device 21 includes a first identification connection module 211, a first environment sensing module 212, and a first decision control module 213.

The first identification connection module 211 includes a Bluetooth wireless communication module or an adaptive network topology plus (ANT+) wireless communication module. In the embodiment, the first identification connection module 211 may be paired and connected with a second identification connection module of the second lighting control device 22 and a third identification connection module of the third lighting control device 23 though identification information. When the identification connection modules are paired and connected together to form the lighting control system 20 (as shown in FIG. 1), the lighting control devices may be operated in the group riding mode.

The first environment sensing module 212 includes, but is not limited to, a radar sensor, a time-of-flight distance sensor, a Doppler sensor, and/or an image sensor. The first environment sensing module 212 mainly senses a rear side of the first bicycle 11 and generates relative distance information, relative speed information, and object size information. It is noted that the types of sensors included in the first environment sensing module 212 are not intended to be limiting, and are configured to obtain information, such as relative distance, relative speed, and object profile, which may be used in subsequent decisions. The relative distance and the relative speed refer to the distance and speed relative to the first bicycle 11 of at least one object behind the first bicycle 11. The term object refers to a physical object behind the first bicycle 11, which may be either a stationary object or a moving object.

The first decision control module 213 is signal-connected with the first identification connection module 211 and the first environment sensing module 212. The signal-connection includes a wired transmission or a wireless transmission. In addition, the transmission signals may include analog or digital signals, without limitation thereto.

After receiving the relative distance information, the relative speed information, and the object size information, the first decision control module 213 may perform a computing process to determine a position in the group riding mode of the first bicycle 11, which is the position among the three bicycles. When it is determined that the first bicycle 11 is located at a rearmost position, which is the last bicycle in the group, the first decision control module 213 controls a first tail light 111 of the first bicycle 11 to emit at a first brightness. However, when it is determined that the first bicycle 11 is not located at the rearmost position, such as a frontmost or a middle position, the first decision control module 213 controls the first tail light 111 of the first bicycle 11 to emit at a second brightness. The second brightness is less than the first brightness. The following example is provided to further illustrate the aforementioned tail light control.

As shown in FIG. 1, in this embodiment, the first bicycle 11 is located at the rearmost position in the group riding mode, the second bicycle 12 is located in the middle position, and the third bicycle 13 is positioned at the frontmost position. In addition, a relative distance threshold is, for example, 10 meters, a relative speed threshold is, for example, 1km/hr, and an object size threshold is, for example, 25%. Here, the object size threshold is, for example, defined based on an area occupied by the object on a sensing plane.

First, the first environment sensing module 212 of the first bicycle 11 detects whether a moving object is located at the rear side of the first bicycle 11. In the embodiment, there is no other bicycle behind the first bicycle 11. As a result, no following bicycle is detected. In other words, the relative distance information may be regarded as infinite. Accordingly, the first tail light 111 is controlled to emit at the first brightness. Here, the first brightness may be the maximum brightness, i.e., a brightness output of 100%.

Next, since the first bicycle 11 is following behind the second bicycle 12, the second environmental sensing module detects, within its sensing range, the presence of a small object which has the size information less than 25%, is located at a relative distance of approximately 5 meters, and is moving at a relative speed of approximately ±0.5 km/hr behind the second bicycle 12. Accordingly, the second decision control module will control the second tail light 121 of the second bicycle 12 to emit at the second brightness. For example, the second brightness may be 50% of the first brightness, although the disclosure is not limited thereto. For example, the brightness of the tail light may be further adjusted according to the relative distance information. For example, when the relative distance information indicates that the distance between the two bicycles is 1 meter, the second brightness is adjusted as 20% of the first brightness. When the distance is 8 meters, the second brightness is adjusted as 70% of the first brightness. It is noted that the abovementioned brightness output percentages are merely exemplary and not intended to be limiting. In other words, as the relative distance increases, the second brightness becomes closer to the first brightness.

In addition, since the second bicycle 12 follows behind the third bicycle 13, a control logic for the third tail light 131 of the third bicycle 13 is similar to the control logic for the second bicycle 12 described above and will not be repeated herein. In summary, in the group riding mode, the lighting control device controls the brightness of the tail light in the following manners. When there is no vehicle approaching from behind, the tail light emits at a normal brightness, i.e., maintaining the aforementioned first brightness. When the object size of the following vehicle is smaller than the object size threshold, the relative distance is less than the relative distance threshold, and the relative speed is below the relative speed threshold, the tail light will reduce its brightness so as to avoid glare or discomfort to the eyes of the following rider in the group. When the object size of the following vehicle is greater than the size threshold and the relative distance is greater than the relative distance threshold, indicating that the following vehicle is a car or pickup truck rather than a bicycle and is at a certain distance, then the tail light will emit at the normal brightness to alert a driver approaching from behind.

Please refer to FIG. 3, which is a schematic block diagram of a lighting control device for a bicycle according to a second embodiment of the present disclosure. In the embodiment, the lighting control device 31 includes an identification connection module 311, an environment sensing module 312, a decision control module 313, and a speed computing module 314. Among them, the identification connection module 311, the environment sensing module 312, and the decision control module 313 have the same functions and connection relationship as the corresponding counterparts described in the aforementioned embodiment, and thus will not be repeated again. In the embodiment, the speed computing module 314 is, for example, a global positioning system (GPS) module or an acceleration-based computing module, and is configured to obtain the speed of the bicycle equipped with the lighting control device 31. When the speed decreases (e.g., to 5 km/h), the relative speed threshold is dynamically reduced, or the detection function is disabled. This configuration is advantageous in that, during deceleration to a stop or acceleration from a stationary state, due to the low relative speed of surrounding objects with respect to the bicycle itself, the sensed information may fall within the threshold range, which could otherwise lead to false detection results.

On the other hand, the aforementioned speed computing module 314 may be integrated into the lighting control device 31, or may alternatively be installed independently of the lighting control device 31, for example, at a position on the bicycle such as the handlebar, and configured to transmit information to the lighting control device 31 via wireless communication. In other embodiments, the speed computing module 314 may also be implemented as the GPS module of the rider's smartphone. However, in such a case, it is necessary for the smartphone to be paired or connected with the lighting control device 31 in order to enable information transmission.

In summary, the dynamic lighting control system and device for group bicycle riding may be operated in the group riding mode by pairing and connecting the lighting control devices of team members. In the group riding mode, the surrounding environment is sensed to determine whether any team members are present and to obtain information related to the team members and the host bicycle, thereby enabling control of the tail light brightness of the host bicycle. Accordingly, when a front bicycle detects an approaching rear bicycle, the tail light brightness of the front bicycle is reduced. When the bicycle is the last in the group, the tail light brightness is restored to a warning level to ensure the rider's personal safety.

While the disclosure has been described in terms of what is presently considered to be the most practical and preferred embodiments, it is to be understood that the disclosure needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A lighting control system (20) for a group riding mode involving a plurality of bicycles (11, 12, 13), the lighting control system (20) **characterized by** comprising:
a plurality of lighting control devices (21, 22, 23), respectively disposed on the bicycles (11, 12, 13), each of the lighting control devices (21) comprising:
an identification connection module (211), configured to be operated in the group riding mode by establishing a paired connection with another one of the lighting control devices (22, 23) through identification information;
an environment sensing module (212), configured to sense toward a rear side of the bicycle (11) on which the environment sensing module (212) is disposed, and configured to generate relative distance information, relative speed information, and object size information; and
a decision control module (213), signal-connected to the identification connection module (211) and the environment sensing module (212), the decision control module (213) being configured to determine a position of the bicycle (11) in the group riding mode according to the relative distance information, the relative speed information, and the object size information, and to control a brightness of a tail light (111) disposed on the bicycle (11) accordingly;
wherein the decision control module (213) controls the tail light (111) on the bicycle (11) to emit at a first brightness when it is determined that the bicycle (11) is at a rearmost position in the group riding mode, the decision control module (213) controls the tail light (111) on the bicycle (11) to emit at a second brightness when it is determined that the bicycle (11) is not at the rearmost position in the group riding mode, and the second brightness is less than the first brightness.

2. The lighting control system (20) according to claim 1, **characterized in that** a condition for controlling the tail light (111) to emit at the first brightness is that the relative distance information is greater than a relative distance threshold and the relative speed information is greater than a relative speed threshold.

3. The lighting control system (20) according to claim 1, **characterized in that** a condition for controlling the tail light (111) to emit at the second brightness is that the object size information is less than an object size threshold and the relative speed information is less than a relative speed threshold.

4. The lighting control system (20) according to claim 3, **characterized in that** the second brightness is adjusted according to the relative distance information, and as the relative distance information increases, the second brightness becomes closer to the first brightness.

5. The lighting control system (20) according to claim 1, **characterized in that** the environment sensing module comprises a radar sensor, a time-of-flight distance sensor, a Doppler sensor, and/or an image sensor.

6. A bicycle lighting control device (21) disposed on a bicycle (11), the bicycle lighting control device (21) **characterized by** comprising:
an identification connection module (211), configured to be operated in a group riding mode by establishing a paired connection with another bicycle lighting control device (22, 23) on another bicycle (12, 13) through identification information;
an environment sensing module (212), configured to sense toward a rear side of the bicycle (11), and configured to generate relative distance information, relative speed information, and object size information; and
a decision control module (213), signal-connected to the identification connection module (211) and the environment sensing module (212), wherein the decision control module (213) is configured to determine a position of the bicycle (11) in the group riding mode according to the relative distance information, the relative speed information, and the object size information, and to control a brightness of a tail light (111) disposed on the bicycle (11) accordingly;
wherein when it is determined that the bicycle (11) is at a rearmost position in the group riding mode, the decision control module (213) controls the tail light (111) on the bicycle (11) to emit at a first brightness, when it is determined that the bicycle (11) is not at the rearmost position in the group riding mode, the decision control module (213) controls the tail light (111) on the bicycle (11) to emit at a second brightness, and the second brightness is less than the first brightness.

7. The bicycle lighting control device according to claim 6, **characterized in that** a condition for controlling the tail light (111) to emit at the first brightness is that the relative distance information is greater than a relative distance threshold and the relative speed information is greater than a relative speed threshold.

8. The bicycle lighting control device according to claim 6, **characterized in that** a condition for controlling the tail light (111) to emit at the second brightness is that the object size information is less than an object size threshold and the relative speed information is less than a relative speed threshold.

9. The bicycle lighting control device according to claim 8, **characterized in that** the second brightness is adjusted according to the relative distance information, and as the relative distance information increases, the second brightness becomes closer to the first brightness.

10. The bicycle lighting control device according to claim 6, **characterized in that** the environment sensing module (212) comprises a radar sensor, a time-of-flight distance sensor, a Doppler sensor, and/or an image sensor.
